# EUROPEAN PATENT APPLICATION

(11) **EP 1 512 705 A1**
(43) Date of publication of application: **09.03.2005**
(21) Application number: 04020250.9
(22) Date of filing: 26.08.2004
(51) Int. Cl.: C08G 18/08, C09J 175/04, B65D 39/00

(54) **A process for the preparation of an aqueous dispersion of polyurethane resin having improved hydrolysis stability, and its use as an adhesive**

(30) Priority: 02.09.2003 IT TO20030669
(71) Applicant: C.O.I.M. S.p.A.- Chimica Organica Industriale Milanese, 20019 Settimo Milanese (IT)
(72) Inventor: Gualandi, Volfango, 20050 Correzzana (Milano) (IT); Doldi, Sergio, 26010 Offanengo (Cremona) (IT)
(74) Representative: Rambelli, Paolo (IT)

(57) **Abstract**

An aqueous dispersion of an anionic polyurethane resin based on polyol polyesters and including suspended carboxylic groups, having improved hydrolysis stability is prepared by means of the operations of:
a) addition to the polyurethane resin, optionally dissolved in organic solvent, before its dispersion in water, of a polyepoxidic compound;
b) contemporaneously or subsequent to phase a), neutralisation of the resin with a base; and
c) dispersion of the resin in water and removal of the optionally added organic solvent.

The resin dispersion is particularly useful as an adhesive particularly for the production of cork stoppers.

## Description

The present invention relates to a process for the preparation of aqueous dispersions of anionic and non-ionic polyurethane resins, based on the use of polyols of the polyester type, having improved characteristics of hydrolysis stability, to an aqueous dispersion thus obtained and to its use as an adhesive, particularly in the food sector, or for the adhesion of articles intended to be put in contact with food products.

Since some years the need has been felt both for ecological and health reasons, and for utility requirements, to have available polyurethane resins dispersed in water, partly to replace those already existing dissolved in organic solvents, and partly in addition, to permit their use in fields where it would not be possible to use solvents or where other technologies, such as melting or extrusion, are not advisable or are excessively expensive.

The typical possibility of constructing the polyurethane chain through polycondensation reactions having well-controlled stages, easily leads to resins being obtained having molecular weights often equivalent to those of polymers prepared through radical polymerisation and then adapted, by operations of a physical and mechanical character, to be used in applications in which hard and durable performance is however required.

As an example it is possible to cite textile sizing resistant to washing, finishes for hides and artificial leathers, paints and adhesives.

By exploiting the relatively low reactivity of some types of isocyanates it has for some years been possible to conduct a large number of polyaddition reactions, even in the presence of water, equally arriving at obtaining molecular weights somewhat equivalent to those derived from bulk and solvent processes.

To obtain a water-dispersible polymer several substances, additives, emulsifiers and reaction mechanisms have been proposed and used for years.

There are thus known and already in common use substances used both as chain extenders and as constituents of the base polyol, such as, for example:
- for resins of anionic type:
   - amino, sodium, potassium salts of acids such as dimethylol propionic, dimethylol butanoic, sulphamic, sulphoisophthalic acids and aminoethyl-aminoethane sulphonic acid; anhydrides, such as phthalic anhydride, trimellitic, hexahydrophthalic, tetrahydrophthalic anhydrides;
- for resins of cationic type:
   - halides, phosphates, lactates, acetates, formiates of mono- and poly-ethanol amine, ammonium and phosphonic quaternary salts;
- for resins of non-ionic type:
   - mono- and/or poly-functional polyethylene glycols.

As far as anionic (and non-ionic) resins are concerned, to which the present invention relates, it is common practice, among those most used, to use dimethylol propionic acids (DMPA) and dimethylol butanoic acids (DMBA) to confer on the polyurethane chain the anionic functionality necessary to obtain, by means of salification thereof with a number of alkali useful for that purpose (among which the most used are the tertiary amines such a triethyl amine and dimethyl amine ethanol), the hydrophilicity grade necessary to achieve an aqueous dispersion which is stable from the colloidal point of view.

There are many methods for obtaining the said dispersions discussed by way of example hereinafter, it being intended that such methods can in general be utilised to prepare the polyurethane dispersion forming the subject of the invention with the adoption of the variants which will be described below.

### Fusion Method

It is possible to distinguish various cases. The ingredients such as polyol (in particular polyester polyol), the chain extender, isocyanate, functional acid or "internal" emulsifier (preferably DMPA or DMBA) are loaded into the reactor, after which the mass is heated and brought to a temperature of the order 80-140°C, making it react until the isocyanic functionality disappears, or rather, more frequently, making it react until reaching a certain residual value of isocyanic functionality.

Then, after partial or total neutralisation of the acid function (DMPA, DMBA) with ammonia, tertiary amine or other base, the prepolymer thus formed is dispersed in water under strong stirring, or the water can be added to the prepolymer, again under strong stirring, in both cases obtaining an aqueous dispersion of polyurethane resin of whitish to transparent appearance.

If the reaction of the preceding phase was conducted until exhaustion of the isocyanic function, the aqueous dispersion obtained corresponds practically to the final product which, however, can still be "externally", post-added with a wide range of additives such as cross linkers, protective colloids, thickeners, anionic and non-ionic water soluble resins, levellers, anti-foaming agents, opacifiers, mineral fillers etc.

In the more frequent case in which it is chosen to disperse the resin (both by dispersion of the polymer in water and by addition of water to the polymer) still containing a residual isocyanic functionality, it is possible to extend the molecular weight further both in the simplest manner, by making the isocyanic groups react with the water present, with the formation of nascent aminic groups which then react with the isocyanic groups still present until exhaustion, or by adding to the dispersed prepolymer solutions of one or more di- and/or poly-amines also in this case, until isocyanic function disappears.

As in the preceding case, it is possible finally to add suitable additives suitable in view of the final application.

Another method consists in melting and causing all the ingredients described above to react until isocyanic function disappears, followed by dispersion in water, here, too, by addition of the prepolymer to the water or vice versa, then by adding chemical agents (for example formaldehyde) which can react first with the terminal groups of the already hydrodispersed polymer (for example amido groups) and then (poly) condense to obtain a further chain extension.

### Method in Solution

In this case, some of the ingredients: polyol, isocyanate (used in excess), chain extender (or functional acid), are reacted in homogeneous phase, or rather in the presence of non-reactive solvents (such as, for example, acetone, metylethylketone, N-methylpyrolidone, dimethylformamide, toluol, etc and/or their mixtures) up to a certain stage of the reaction, followed in a second phase by addition of the functional acid (or of the chain-extender respectively).

After reaction of this latter the polymer is dispersed in water (or by addition of water to the prepolymer) and, if residual isocyanic functionality is still present, a further chain extension is achieved by addition of di- or poly-amine or similar substance, dissolved in water or in solvent.

At the end of the reaction one or more of the solvents present is extracted by distillation under vacuum.

One example of a variant of the process described is the reaction in the first stage of a portion of the ingredients without the presence of the solvent, following which it is diluted, with a suitable solvent, with subsequent dispersion - direct or indirect - in water, with or without final extension of the polymer. The solvents are then entirely or partly removed by distillation under vacuum.

Further known and described variants of the first and second method consist in that the final extension of the prepolymer can take place in the portion of water in which the dispersion of the prepolymer is effected, in which one or more chain extenders have been dissolved, the reactivity of which, with respect to the isocyanic functionality, is greater than that of water.

In all cases anionic PU dispersions are obtained, dispersed in water, by virtue of the presence in the macromolecule of carboxylic groups salified with bases, for the most part organic (amine) bases.

Considering now the structure of a polyurethane dispersed in water in which use was made of DMPA of DMBA or analogous functional acids, it can be seen that in the polymeric chain side groups are distributed in more or less significant quantities; for example, the said functional acids may constitute from 1-1.5% to 4-6% by weight of the total polymer.

Although neutralised with organic bases, whenever used together with polyols of polyester type, the said groups induce, in the presence of water, over time, the phenomenon of hydrolysis or rather saponification at the ester groups of the polymeric chain.

The consequence of this demolition reaction is the formation of a hydroxylic group and a carboxylic group for each mole of water reacted, obviously accompanied by the depolymerisation of the resin with loss of its initial properties.

The acid group then formed, by reducing the pH of the system, catalyses and therefore increases the speed of the hydrolysis reaction with a "hinge" effect which will quickly lead to unusability of the product.

Different solutions have been proposed in the patent literature to improve the stability of polyurethane dispersions against hydrolysis.

US 4 501 852 describes aqueous dispersions of polyurethane-urea containing anionic groups and lateral or terminal hydrophilic chains containing units of ethylene oxide, where the counter-ions of the anionic groups are a mixture of volatile and non-volatile cations.

US 4 701 480 likewise refers to aqueous dispersion of polyurethane-urea, where the carboxylic groups are neutralised with volatile organic bases which are converted to carboxylate groups neutralised with cations by means of the addition of alkali metal salts of organic or inorganic acids, with final removal of the organic bases.

US 4 617 387 and US 6 639 478 describe the use of bis-morphelins as hydrolysis stabliser of the polymers containing ester groups, particularly polyurethanes.

US 4 071 503 describes the use of carbodiimides as stabilisers for the polyester chain.

US 5 236 995 on the other hand describes anionic aqueous dispersions of polyurethanes which have carboxylic groups which are post-extended by making the carboxylic groups of the polyurethane resin react with epoxy compounds for the purpose of providing cladding compositions for multi-layer claddings in the motor vehicle field.

The object of the present invention is that of providing a process for the preparation of aqueous polyurethane dispersions having improved characteristics of hydrolysis stability which - in view of their chemical nature - can be used advantageously as adhesives, particularly in the food sector, that is as adhesives intended for the adhesion of products in contact with foods.

The subjects of the invention are defined in the annexed claims.

According to the invention, the anionic polyurethane prepolymers, however prepared, and before their dispersion or emulsion in water, have polyepoxidic, aliphatic, cycloaliphatic or aromatic compounds added to them.

The term polyepoxidic compounds is intended to mean compounds having at least two oxyran groups. Suitable polyepoxidic compounds comprise di- and tri-glycidyl ethers of diols, triols and bisphenols, or derivatives of cyclohexene oxides. Particularly preferred polyurethane dispersions forming the subject of the invention for use as adhesive in contact with food products are diglycidyl ether of bisphenol A and the diglycidyl ether of cyclohexandimethanol.

The addition of the polyepoxidic compound can be effected on the polyurethane prepolymer as such, but preferably, taking account of its high viscosity, which would require undesirably high temperatures for mixing, the addition to the prepolymer dissolved in homogeneous manner in an appropriate non-reactive solvent is preferred.

The preferred method for the preparation of prepolymer is the fusion method discussed above, performed in the absence of solvent. In this case the synthesis reaction of the prepolymer or polyurethane prepolymer is performed by making the reagents react until the isocyanic functionality disappears, or until a desired residual value of isocyanic functionality is reached.

Then, the mass of reaction product is diluted with solvent, preferably constituted by acetone, until a homogenous solution having a typical temperature between 10 and 70°C, but preferably less than or equal to 50°C, is obtained. The polyepoxidic compound is added to the solution thus obtained and at the said temperature.

It is intended, however, that in the case of preparation of the prepolymer with the use of non-reactive solvents such as, for eample, acetone, methylethylketone, methylpropylketone, methylisobutylketone, N-methyl-methylpyrolidone, dimethyl formamide and their mixtures, the addition of the polyepoxidic compound can be performed on the prepolymer dissolved in the reaction solvent.

Following addition of the polyepoxidic compound or contemporaneously with this addition, the acid functionalities of the prepolymer are at least in part or totally neutralised with an organic base such as an amine preferably a tertiary amine or an alcohol amine, among which are particularly preferred triethylamine and dimethylaminoethanol, or with an inorganic base such as carbonate or bicarbonate of Na or K, or hydroxide of Na or K.

Dispersion in water with the addition of water, preferably demineralised, then follows to obtain a fluid dispersion from which the solvent which may have been added can be removed, for example by distillation under vacuum, at a temperature which preferably does not exceed 70°C and preferably is less than or equal to 60°C.

Within the scope of the process according to the invention the polyepoxidic additive compounds are utilised as hydrolysis inhibitors, presumably having the function of blocking upon initiation the increase of acidity by reaction with the carboxylic groups which would form by hydrolysis of the main polyurethane chain.

For this reason, the addition of the polyepoxidic compounds is effected under conditions such as to avoid or in any event to minimise the possible reaction of the epoxidic groups with the carboxylic groups present in the functional acids or internal emulsifiers utilised, such as dimethyl propionic acids (DMPA) dimethylol butanoic acid (DMBA).

Similarly, the operations subsequent to addition of the epoxy compounds, particularly the removal of the solvent, are performed in conditions such as to avoid or minimise the said possible reaction.

In fact, various analyses and tests provide evidence against the hypothesis that the carboxylic reagent groups are those deriving from the DMPA or DMBA acids in the chain. From such analyses and tests it is possible to see that:
- the acidity of the resins dispersed does not change or changes very little during at least 10-12 months of storage and observation at ambient temperature;
- the stability of the dispersions is maintained very well during the same time period, which would be almost impossible if the stabilising acidity were coming from DMPA or DMBA reacted or reacting with the said epoxy groups;
- the mechanical properties (tensile strength of samples adhered with fresh and aged product) practically does not change over time period of about 10-12 months, whilst in the absence of epoxidic compounds a dramatic decay in the characteristics is noted already after 3-4 months, but with initiation even more rapidly depending on the type of polyol used;
- the adhered samples, coming from polyurethane to which epoxy compounds have been added passed test of resistance to boiling water and moisture saturated atmosphere ("tropical test") performed by potential adhesive users and for different fields of application, whilst the corresponding dispersions without the additives do not pass these tests.

Although the applicant does not intend to be limited to any explanation of the good stability of the polyurethane dispersions obtained, it can be presumed that it is due to the fact that:
a) the epoxy compounds used are sequestered in the form of microphases, in which their mobility is somewhat reduced; and/or
b) during the emulsifying phase there is, in each case, the phenomenon of orientation and concentration of the major part of the salified acid groups (highly polar) of the polymer towards the aqueous phase, whilst the epoxy compounds tested, which were very much more hydrophobic, would be confined rather stably to the interior of the dispersed particle in contact with the purely hydrophobic portion of the macromolecule of the hydrodispersed polyurethane.

Within the scope of the invention it is preferable to use polyurethane prepolymers and polymers obtained from:
i) polyol polyesters obtained by reaction of aliphatic or aromatic dicarboxylic acids, preferably aliphatic, such as adipic acid, succinic, suberic, azelaic, sebacic acids with diols having from 2 to 6 carbon atoms, preferably 1, 4-butandiol, 1,6-hexandiol and neopentylglycol; it is naturally intended that the polyol polyester is not limited to the above listed examples;
ii) a functional acid having at least one acid group, preferably a carboxylic group, and at least two active hydrogen functionalities, preferably hydroxylic groups; the compounds DMPA and DMBA mentioned above being preferred, generally being present in quantities from 1-1.5% to 4-6% by weight of the total polyurethane polymer;
iii) a polyisocyanate, preferably aliphatic or cycloaliphatic containing at least two isocyanate groups per molecule, among which isophorondiisocyanate is particularly preferred.

The molecular weight of the polyurethane prepolymer or polymer is generally between 1000 and 100,000 and it preferably has an acid number between 3 and 40 mg KOH/g, more preferably from 5 to 20 mg KOH/g.

The epoxy compounds are typically added to the polyurethane prepolymer or polymer containing carboxylic groups, preferably in molar ratio between groups COOH and epoxy groups in a range from 5:1 and 1:1.

The aqueous polyurethane dispersion against hydrolysis stabilised according to the invention can be utilised as an adhesive with possible addition of additives conventional for this function, such as, for example, thickeners, wetting agents, levelling agents, cross linking agents, etc. However, in the preferred form of use as an adhesive, the water-dispersed polyurethane is further cross linked in applicative phase by means of the addition of a cross linking agent which preferably is constituted by a water dispersible aliphatic polyisocyanate.

Thus, within the scope of the invention are both single component compositions, constituted by a aqueous dispersion of polyurethanes stabilised against hydrolysis obtained as previously indicated, typically having a dry content of the order of 40 to 70% by weight, and 2-component systems comprising as first component the said dispersion and as second component a cross linking agent, preferably a hydrophilic aliphatic polyisocyanate. The cross linking agent which is added in applicative phase is typically mixed in a ratio by weight of polyurethane dispersion/cross linking agent lying between 99:1 and 90:10.

The mixtures thus obtained by dispersion with mechanical agitators generally have a pot-life of about eight hours in normal ambient conditions.

The preferred form of use of the formulations described above, both in the single component and twin component system, is that of adhesive for the production of stoppers of cork, in particular stoppers formed by a body of cork chips to the base of which are connected by adhesion one or more washers or discs of cork on the side of the body intended in use to face towards the liquid contained in the bottle to which the stopper is fitted.

According to the conventional technique used until now the said stoppers - typically utilised for bottles of sparkling wine or champagne - are obtained by utilising adhesives typically constituted by natural caseins for the adhesion of the washer of cork to the body or for the addition of two or more washers together.

However, adhesives based on casein have disadvantages caused principally by the risk of decomposition or degradation of the casein into malodorous components.

The polyurethane adhesive described above, both in the single component and twin component formulation, is particularly useful as an adhesive to replace the said natural caseins and its chemical and physical characteristics make it suitable for use in articles in contact with foods.

The improved hydrolysis stability not only extends the shelf life (storage life) of the formulations making their use in industry as adhesive possible, but furthermore limits the hydrolytic degradation of the adhesive in the cork stopper by contact with the aqueous liquid contained in the bottle very substantially.

The following examples are provided by way of non-limitative example.

### Example 1

380g of polyester of adipic acid, neopentylglycol and 1,6-hexandiol (OH number = 56) and 10.8g of dimethyl propionic acid were accurately mixed and brought to 120°C for about 15 minutes until complete dissolution of the dimethyl propionic acid in the polyester.

After cooling to a temperature of 60°C and adding 91.5g of isophorondiisocyanate the temperature was gradually brought to 85-90°C and maintained in these conditions for about three hours until reaching the theoretical value of NCO%. The prepolymer was then brought to a temperature of about 80°C and the mass diluted by slowly adding and at direct reflux, 260g of acetone until obtaining a homogeneous solution below 50°C to which was added 9.5 g of cyclohexandimethanoldiglycidilether and 8g of triethylamine.

To the mixture thus obtained was added, in about 30 minutes, 500g of demineralised water obtaining a fluid dispersion of milky appearance which was brought to 60°C applying a vacuum to distil the acetone. Final product is an anionic polyurethane aqueous dispersion with dry content of 50%, pH 8 and viscosity of 80 mPa.s which provides a clear soft film of amorphous type.

### Example 2

200g of a polyester from adipic acid, neopentylglycol and 1,6-hexandiol (OH number = 56), 200g of a polyester from adipic acid and 1,4-butandiol (OH number = 40) and 10g of dimethylpropionic acid were mixed accurately and brought to 120°C for about 15 minutes until complete dissolution of the dimethylpropionic acid in the polyesters.

It was cooled to a temperature of 60°C and 70g of isophorandiisocyanate added, gradually brought to a temperature of 85-90°C and maintained in these conditions for about three hours until reaching the theoretical value of NCO%. The prepolymer was then brought to a temperature of about 80°C and the mass diluted by adding, slowly and at direct reflux, 230g of acetone until obtaining a homogeneous solution below 50°C to which 9g of diglycidylether of bisphenol A and 7.2g of triethylamine were added.

To the mixture thus obtained was added, in about 30 minutes, 500g of demineralised water, obtaining a fluid dispersion of milky appearance which was brought to 60°C by applying vacuum to distil the acetone. The final product is an anionic polyurethane aqueous dispersion with dry content of 50%, pH 8.2 and viscosity of 60mPa.s which provides a soft film of good tenacity of semi-crystalline type.

### Example 3

28g of a polyester of adipic acid, neopentylglycol and 1,6-hexandiol (OH number = 56), 375g of a polyester of adipic acid and 1,4-butandiol (OH number = 40) and 11.5g of dimethylolpropionic acid were mixed accurately and brought to 120°C for about 15 minutes until complete dissolution of the dimethylolpropionic acid in the polyesters.

It was cooled to a temperature of 60°C and 72g of isophorondiisocyanate added, then the temperature was gradually brought to 85-90°C and maintained in these conditions for about three hours until reaching the theoretical value of NCO%. Then the prepolymer was brought to a temperature of about 80°C and the mass diluted by slowly adding 190g of acetone at direct reflux until obtaining a homogeneous solution below 50°C to which was added 9g of diglycidylether of bisphenol A and 8.5g of triethylamine.

To the mixture thus obtained was added, in about 30 minutes, 500g of demineralised water obtaining a fluid dispersion of milky aspect which was brought to 60°C by applying vacuum to distil the acetone. Final product is an anionic polyurethane aqueous dispersion with dry content of 50%, pH 8.1 and viscosity of 120 mPa.s which provides a tough film of crystalline type.

### Example 4

390g of a polyester of adipic acid and 1,6-hexandiol (OH number = 38) and 11.5g of dimethylolpropionic acid were mixed accurately and brought to 120°C for about 15 minutes until complete dissolution of the dimethylolpropionic acid in the polyester.

It was cooled to a temperature of 60°C and 72g of isophorandiisocyanate were added, gradually brought to a temperature of 85-90°C and maintained in these conditions for about three hours until reaching the theoretical value of NCO%. Then the prepolymer was brought to a temperature of about 80°C and the mass diluted by slowly adding at direct reflux, 300g of acetone until obtaining a homogeneous solution below 50°C to which 9.5g of diglycidylether of bisphenol A and 8.5g of triethylamine were added.

To the mixture thus obtained was added, in about 30 minutes, 500g of demineralised water obtaining a fluid dispersion of milky aspect which was brought to 60°C by applying vacuum to distil the acetone. The final product is an anionic polyurethane aqueous dispersion with dry content of 50%, pH 8.3 and viscosity of 150 mPa.s which provides a tough film of crystalline type.

### Example 5

The preparation is the same as before with the only difference represented by the addition of cyclohexandimethanol diglycidylether in place of diglycidylether of bisphenol A.

### Example 6

The preparation is identical to 4) with the only difference represented by the total absence of epoxy compounds, to serve as a reference example of materials not stabilised against hydrolysis.

| Physical and mechanical characteristics | | | | |
|---|---|---|---|---|
| | 100% elongation modulus (MPa) | 300% elongation modulus (MPa) | Elongation at breakage | Breaking load (MPa) |
| 1 | 1.1 | 1.9 | 758% | 9.6 |
| 2 | 2.8 | 4.9 | 920% | 24.1 |
| 3 | 7.2 | 13.8 | 570% | 38.9 |
| 4 | 9.2 | 14.6 | 582% | 44.4 |
| 5 | 8.8 | 12.6 | 636% | 40.2 |
| 6 | 8.2 | 15.1 | 560% | 39.6 |

### Tests of resistance against hydrolysis

The dispersions were subjected to accelerated ageing at 60°C and samples were periodically taken on which to analyse the chemical and physical properties.

In the following tables are plotted summaries of the results obtained.

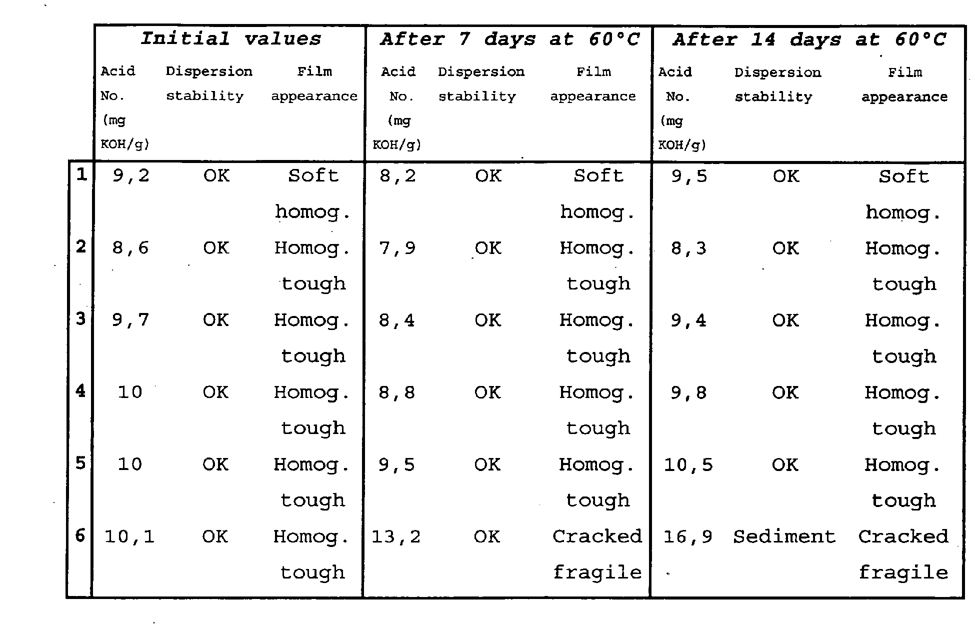

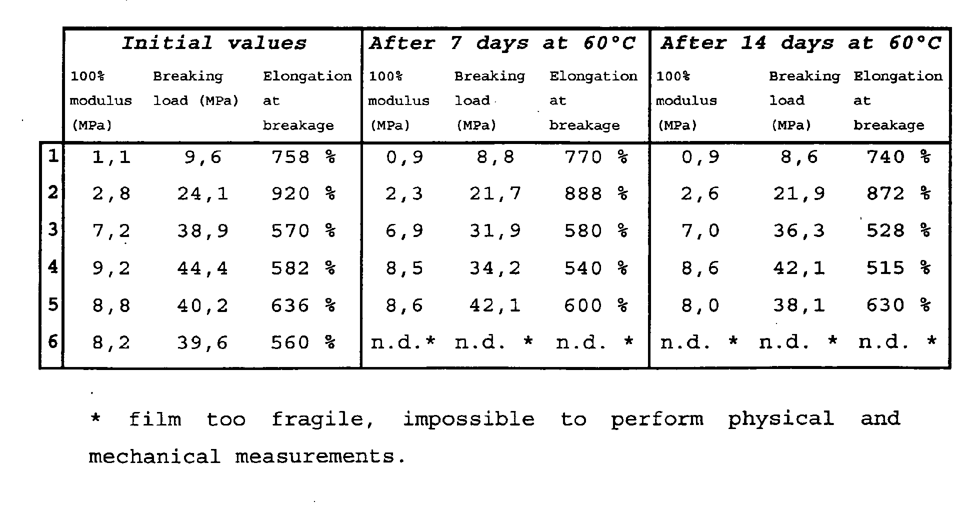

Example 4 was chosen as a model suitable to describe the behaviour of all the other analogous formulations and on this basis the study was extended also by applying the GPC and HPLC analyses.

A series of samples of industrial production having different degrees of natural ageing were analysed, obtaining the following results:

| Product | Age at the time of analysis | UV detector | | | RI detector | | |
|---|---|---|---|---|---|---|---|
| | | Mn | Mw | Mz | Mn | Mw | Mz |
| A | 4 days | 240 | 1850 | 60200 | 1560 | 28800 | 77000 |
| B | 50 days | 260 | 5490 | 66800 | 2260 | 28700 | 61700 |
| C | 10 months | 220 | 11700 | 60400 | 2740 | 27300 | 54900 |

For the purpose of quantification of the average molecular weight the most reliable data were those provided by the refractive index detector, in that the signal detected in the case of the UV detector is considered to be almost exclusively due to the bisphenolic unit of the epoxy resin and not to the completely aliphatic urethane polymer.

The results obtained lend themselves to several considerations:
A. The value of Mn are of little use for analytical purposes since they are strongly influenced by the concentration of the system of free epoxy resin, a quantity which is not constant but with a tendency to reduce over time;
B. Mz, indices of high molecular weight, show, as predictable, maximum values in the case of recently produced products and gradually decreasing values with increase in ageing time (hydrolysis) without however showing a true and proper demolition of the polymeric chain which demonstrates the efficacy of the treatment adopted (the sample at 10 months ageing is characterised by an Mz about equal to 70% of that of the fresh sample and an Mw only reduced to 95% of a typical initial value);
C. The Mw are perhaps the parameters most suitable to describe the effective average molecular weight of these products and shows a substantial maintenance (retention) of the polymer up to about one year of life (in the aqueous dispersion state);
D. The chromatographic traces obtained with UV detector provide interesting information on the distribution over time of the epoxy resin within the disperse system: the recently produced samples show intense signals in the zone of the lowest molecular weights and almost undetectable or very small signals in the zone of medium to high molecular weights (presence of significant quantities of the free epoxy resin in the system, as confirmed by quantitative HPLC analysis); the situation reverses in samples having a high degree of ageing with more intense signals on the high molecular weights.

Since the signals detectable by UV are almost exclusively due to the aromatic rings of bisphenol A - diglycidylether this signifies that upon the passage of time the epoxy resin comes to be part of the polyurethane chain (in this case HPLC analysis also confirms the reduction over time of free epoxy resin).

In conclusion, the use of diepoxy compounds of aliphatic or aromatic nature in hydrodispersed polyurethane systems based on polyester show an effective protection action against hydrolysis, as evidenced both by physical and mechanical tests and by chemical and chromatographic analyses.

## Claims

1. A process for the preparation of an aqueous dispersion of an anionic polyurethane resin based on polyol polyesters and including carboxylic side groups, having improved stability against hydrolysis, **characterised in that** it comprises the operations of:
a) addition to the polyurethane resin, optionally dissolved in organic solvent, before its dispersion in water, of a polyepoxy compound;
b) contemporaneously or after phase a) neutralisation of the resin with a base; and
c) dispersion in water of the resin and removal of the optionally added organic solvent.

2. A process according to Claim 1, **characterised in that** the said polyepoxy compound is added to the polyurethane resin in a molar ratio between carboxylic groups and epoxidic groups from 5:1 to 1:1.

3. A process according to Claim 1 or Claim 2, **characterised in that** the addition of polyepoxy compound is performed with the polyurethane resin dissolved in solvent at the temperature lying between 10 and 70°C, preferably not greater than 50°C.

4. A process according to Claim 3, **characterised in that** the removal of the organic solvent is effected by distillation under vacuum at a temperature not greater than 70°C.

5. A process according to any of Claims 1 to 4, **characterised in that** the said epoxy compound is chosen from diglycidylether of bisphenol A and diglycidylether of cyclohexandimethanol.

6. A process according to any of Claims 1 to 5, **characterised in that** the said anionic polyurethane resin is obtained by polycondensation reactions of:
- a polyol polyester obtained from aromatic or aliphatic carboxylic acids and diols having from 2 to 6 carbon atoms;
- at least one functional acid having at least one carboxylic group and at least two active hydrogen functionalities, preferably dimethylolpropionic acid or dimethylolbutanoic acid;
- an aliphatic or cycloaliphatic polyisocyanate preferably isophorondiisocyanate.

7. A process according to any of Claims from 1 to 6, **characterised in that** the said polyurethane resins are neutralised with triethylamine or dimethylamine ethanol.

8. A composition of anionic polyurethane resin in aqueous dispersion, stabilised against hydrolysis, obtainable by means of a process according to any of Claims 1 to 7.

9. A single component adhesive system including an anionic polyurethane composition according to Claim 8.

10. A two-component adhesive system including an anionic polyurethane composition according to Claim 8 and a water dispersible aliphatic polyisocyanate.

11. Use of a single component adhesive system according to Claim 9 or a two-component adhesive system according to Claim 10 in the production of cork stoppers, comprising a body of cork chips which body is glued to a cork washer by means of one of the said adhesive systems.

12. A cork stopper, particularly a stopper for sparkling wines or the like, comprising a body of cork chips and a cork washer glued to the body by means of a single component or two-component adhesive according to Claims 9 and 10.
